# EUROPEAN PATENT APPLICATION

(11) **EP 2 840 306 A1**
(43) Date of publication of application: **25.02.2015**
(21) Application number: 14180877.4
(22) Date of filing: 13.08.2014
(51) Int. Cl.: F21V 8/00

(54) **Display device**

(30) Priority: 20.08.2013 JP 2013170781
(71) Applicant: Funai Electric Co., Ltd., Daito-shi, Osaka 574-0013 (JP)
(72) Inventor: Horiuchi, Hirofumi, Daito-shi, Osaka 574-0013 (JP); Sasaoka, Hiromasa, Daito-shi, Osaka 574-0013 (JP); Hayashi, Yuichi, Daito-shi, Osaka 574-0013 (JP)
(74) Representative: Global IP Europe Patentanwaltskanzlei

(57) **Abstract**

A display device includes a display panel (20) and a backlight unit (40). The backlight unit has a light source (46) that emits light, a light guide plate (44) that guides the light from a side face of the light guide plate to a front face to the light guide plate to emit the light toward a rear face of the display panel, an optical sheet (41, 2, 43) that is disposed on a front side relative to the light guide plate, and a first reflection member (47) that is disposed between an end portion of the light guide plate near the light source and an end portion of the optical sheet near the light source, and reflects the light from the light source. One of a rear face of the first reflection member and the front face of the light guide plate has at least one absorption processing region that absorbs the light.

## Description

### CROSS-REFERENCE TO RELATED APPLICATIONS

This application claims priority to Japanese Patent Application No. 2013-170781 filed on August 20, 2013. The entire disclosure of Japanese Patent Application No. 2013-170781 is hereby incorporated herein by reference.

### BACKGROUND

### Field of the Invention

The present invention generally relates to a display device. More specifically, the present invention relate to a display device with an edge-light type of backlight unit. Background Information

There are conventional display devices with an edge-light type of backlight unit (see Japanese Unexamined Patent Application Publication No. 2004-127918 (Patent Literature 1), for example).

### SUMMARY

With this display device, from the standpoint of saving energy, in order to reduce the amount of power consumed by the light source that emits light guided to the light guide plate, it is necessary to dispose the light source that emits light guided to the light guide plate on only one side of the light guide plate, or to make use of a plurality of LEDs (light emitting diodes; point light source elements). However, when the display device is configured as above, the amount of light emitted from the backlight unit on the rear face side of the display panel ends up varying from one screen region to the next. Thus, there is a problem in that the displayed image ends up being lower in quality.

In view of this, the present invention is conceived in light of the above situation. One object is to provide a display device with which a high-quality image can be displayed at low power consumption.

In view of the state of the known technology, a display device includes a display panel and a backlight unit. The display panel is configured to display images. The backlight unit is disposed on a rear side relative to the display panel. The backlight unit has a light source that is configured to emit light, a light guide plate that is configured to guide the light from the light source from a side face of the light guide plate to a front face to the light guide plate to emit the light toward a rear face of the display panel, an optical sheet that is disposed on a front side relative to the light guide plate, and a first reflection member that is disposed between an end portion of the light guide plate near the light source and an end portion of the optical sheet near the light source, and is configured to reflect the light from the light source. One of a rear face of the first reflection member and the front face of the light guide plate has at least one absorption processing region that is configured to absorb the light from the light source.

Also other objects, features, aspects and advantages of the present disclosure will become apparent to those skilled in the art from the following detailed description, which, taken in conjunction with the annexed drawings, discloses one embodiment of the display device.

### BRIEF DESCRIPTION OF THE DRAWINGS

Referring now to the attached drawings which form a part of this original disclosure:
FIG. 1 is an elevational view of a display device in accordance with a first embodiment;
FIG. 2 is an exploded perspective view of the display device in accordance with the first embodiment;
FIG. 3A is a detail cross sectional view of a left side portion of the display device, taken along A-A line in FIG. 1;
FIG. 3B is a detail cross sectional view of a right side portion of the display device, taken along the A-A line in FIG. 1;
FIG. 4 is a plan view of a light guide plate, a LED bar and a reflector of the display device, illustrating the relation between a plurality of LEDs of the LED bar and absorption processing regions on a rear face side of the reflector;
FIG. 5 is a plan view of the light guide plate and the LED bar, illustrating the distribution of light emitted from the LED bar toward the light guide plate; and
FIG. 6 is a detail cross sectional view of a right side portion of a display device in accordance with a second embodiment, taken along A-A line in FIG. 1.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents. Specifically, the numerical values, shapes, materials, constituent elements, layout positions and connection modes of the constituent elements, and so forth given in the following embodiments are provided all just for illustration only and not for the purpose of limiting the present invention. The present invention is merely defined by the appended claims. Of the constituent elements in the following embodiments, those not mentioned in an independent claim are not necessarily needed to achieve the object of the present invention, and will be described for understanding of the embodiments.

### FIRST EMBODIMENT

### Overall Configuration of Display Device

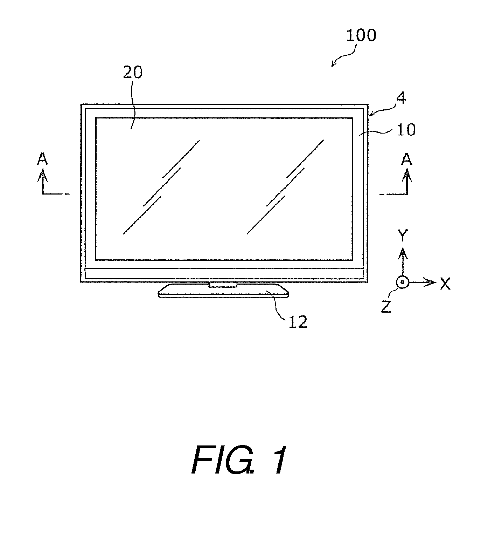

First, the overall configuration of a display device 100 in accordance with a first embodiment will be described through reference to FIGS. 1, 2, 3A, and 3B. In these drawings, the X axis direction is depicted as the left and right (or horizontal) direction, the Y axis direction as the up and down (or vertical) direction, and the Z axis direction as the forward and backward direction. That is, the X axis positive direction side is the right direction, the X axis negative direction side is the left direction, the Y axis positive direction side is the up direction, the Y axis negative direction side is the down direction, the Z axis positive direction side is the forward direction (e.g., the front side), and the Z axis negative direction side is the backward direction (e.g., the rear side). Depending on the usage mode. However, the X axis direction, Y axis direction, and Z axis direction may not correspond to the left and right direction, the up and down direction, and the forward and backward direction, respectively, depending on the orientation of the display device 100. Thus, the above is not the only option. The same applies to the other drawings as well.

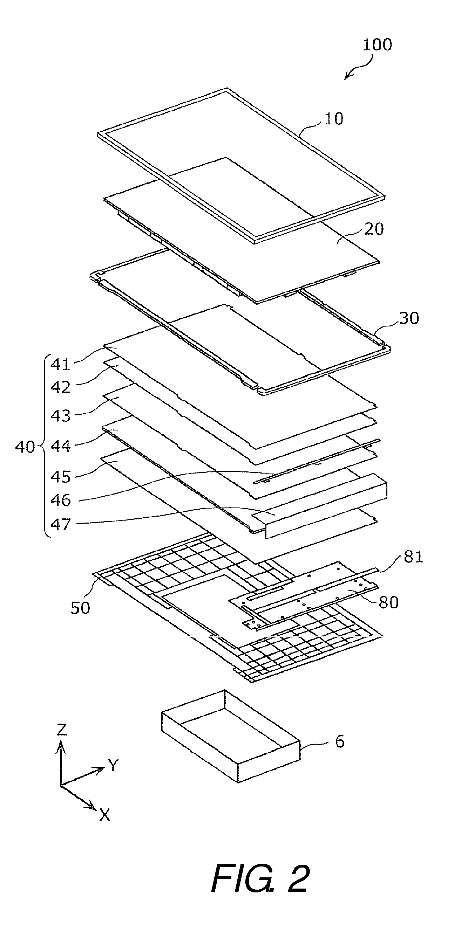

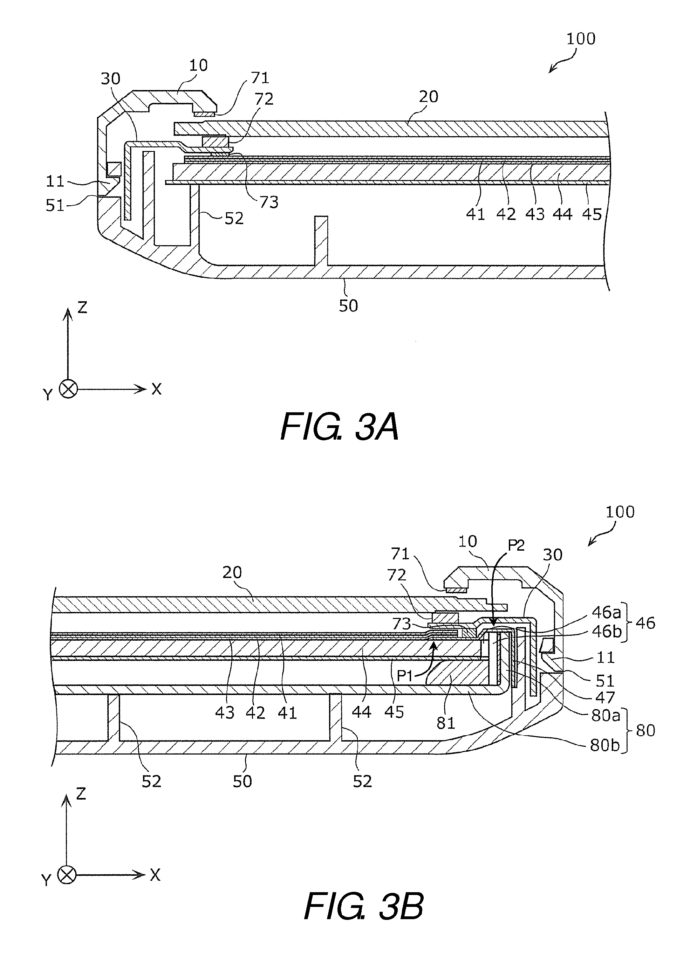

FIG. 1 is an elevational view of the exterior of the display device 100 in accordance with the first embodiment. FIG. 2 is an exploded perspective view of the display device 100 in accordance with the first embodiment. FIG. 3A is a detail cross sectional view of a left side portion of the display device 100, taken along A-A line in FIG. 1. FIG. 3B is a detail cross sectional view of a right side portion of the display device 100, taken along the A-A line in FIG. 1.

As shown in FIGS. 1, 2, 3A, and 3B, the display device 100 in accordance with the first embodiment is a liquid crystal television set equipped with a housing 4. The housing 4 includes a front cabinet 10 (e.g., a frame-shaped member) and a rear frame 50 (e.g., a rear face member) that are fitted together.

The front cabinet 10 is in the form of a frame, and covers the outer peripheral part of a liquid crystal cell 20 (e.g., a display panel; discussed below). That is, the front cabinet 10 holds down the outer peripheral part of the liquid crystal cell 20 from the front face side via a cushioning member 71 (discussed below), and is fixed to the rear frame 50. More specifically, as shown in FIGS. 3A and 3B, hooks 11 that are provided at the left and right ends of the front cabinet 10 and extend rearward are mated with openings 51 provided to the rear frame 50, which fixes the front cabinet 10 to the rear frame 50. That is, in this embodiment, the front cabinet 10 and the rear frame 50 are snap-fitted together by the hooks 11 and the openings 51. Of course, the front cabinet 10 and the rear frame 50 can be fitted together in a different manner. The front cabinet 10 is molded from plastic, for example.

The rear frame 50 is disposed so as to cover the rear face side of the liquid crystal cell 20. The rear frame 50 is molded from plastic, for example. A rear cover 6 is attached in the middle of the outer face of the rear frame 50. A power supply board or the like (not shown) for supplying power to the liquid crystal cell 20, etc., is disposed in the interior of the rear cover 6. A stand 12 for supporting the housing 4 from below is attached to the lower end of the rear cover 6. The stand 12 need not be attached to the rear cover 6. The rear cover 6 is molded from plastic, for example.

As shown in FIGS. 2, 3A, and 3B, the liquid crystal cell 20, a cell guide 30 (e.g., a supporting member), and a backlight unit 40 are disposed in the interior of the housing 4. In the illustrated embodiment, the backlight unit 40 is disposed on the rear side relative to the liquid crystal cell 20.

The liquid crystal cell 20 is a display panel with a rectangular outer shape, and is, for example, a liquid crystal display panel capable of displaying images at a resolution of 1920 × 1080. The liquid crystal cell 20 is a device that reproduces the desired colors for a plurality of pixels by adjusting the amount of transmission of light emitted from the backlight unit 40 for each of red, green, and blue color filters (not shown) provided to the plurality of pixels (such as 1920 × 1080 pixels). That is, the liquid crystal cell 20 can display the desired images on the screen on the front face by reproducing the desired colors for each of the pixels.

The backlight unit 40 includes a plurality of optical sheets 41 to 43, a light guide plate 44, a reflective sheet 45, an LED (light emitting diode) bar 46 (e.g., a light source), and a reflector 47 (e.g., a first reflection member).

The optical sheets 41 to 43 are disposed on the front side relative to the light guide plate 44. The optical sheets 41 to 43 include a diffusing sheet that diffuses and evens out the light emitted from the front face of the light guide plate 44, a converging sheet that efficiently emits the evened out light to the liquid crystal cell 20, etc.

The light guide plate 44 is a flat member whose shape corresponds to the shape of the liquid crystal cell 20. The light guide plate 44 guides the light from the LED bar 46 to the interior and emits the light guided into the interior toward the rear face of the liquid crystal cell 20. Specifically, in the illustrated embodiment, the light guide plate 44 guides the light from the LED bar 46 from a side face (or right side face) of the light guide plate to the front face of the light guide plate to emit the light towards the rear face of the liquid crystal cell 20. The light guide plate 44 reflects the light guided into the interior from the side so that the entire rear face of the liquid crystal cell 20 is illuminated. As shown in FIGS. 3A and 3B, the entire outer peripheral edges of the optical sheets 41 to 43 and the light guide plate 44 are arranged to overlap with the cell guide 30 (in a laminated state). In other words, the cell guide 30 support the outer peripheral edges of the backlight unit 40 from the front side.

The LED bar 46 includes a plurality of LEDs 46a (e.g., a plurality of point light source elements) and the slender plate member 46b. The LEDs 46a are arranged on the main face of the slender plate member 46b in a single row in the lengthwise direction and spaced apart by a specific distance. As shown in FIG. 3B, the LED bar 46 is disposed on the right side of the light guide plate 44, and emits light to the left, that is, toward the right face of the light guide plate 44. That is, the LED bar 46 has the LEDs 46a as the plurality of point light source elements disposed aligned in the Y axis direction along the right end of the light guide plate 44.

In the first embodiment, the LEDs 46a are package-type LEDs. Consequently, the light emitted by the LED chips of the LEDs 46a can efficiently illuminate the right face of the light guide plate 44. Of course, different types of LEDs can be used as the LEDs 46a as needed and/or desired.

As shown in FIG. 3B, a heat sink 80 for disposing the LED bar 46 is provided on the right side of the rear frame 50. The heat sink 80 is a metal member that is L-shaped in cross section, and includes a first heat sink 80a that is parallel to the Y-Z plane and a second heat sink 80b that is parallel to the X-Y plane. The first heat sink 80a is disposed at the right end in the interior of the rear frame 50. The second heat sink 80b is formed on the rear frame 50 and is disposed so as to be in contact with the upper end of a rib 52 extending forward from the rear face side of the rear frame 50. That is, the heat sink 80 is disposed at the right-rear end in the interior of the rear frame 50. The slender plate member 46b of the LED bar 46 is disposed along the first heat sink 80a. Thus, the LED bar 46 is disposed in a state of contact with the heat sink 80, so any heat generated by the LED bar 46 can be efficiently dispersed.

A spacer 81 for positioning in the forward and backward direction of the right end of the light guide plate 44 is provided to the left of the LED bar 46 in a state of being in contact with the portions of the second heat sink 80b and the slender plate member 46b of the LED bar 46 that are further to the rear than the LEDs 46a. The light guide plate 44 is positioned by the spacer 81 at a position that coincides with the optical axes of the LEDs 46a of the LED bar 46 via the reflective sheet 45. The surface of the spacer 81 on the front face side can have reflective characteristics. That is, the spacer 81 can function as a second reflection member. In this case, the spacer 81 is provided with a face having reflective characteristics on the rear face side between the light guide plate 44 and the LED bar 46. More specifically, the spacer 81 (e.g., the second reflection member) can have a front face with reflective characteristics, and be disposed on the rear side relative to the light guide plate 44 and a part of the LED bar 46, such as the LEDs 46a.

The reflector 47 is disposed between the end portion of the light guide plate 44 on the LED bar 46 side (e.g., near the light source) and the end portion of the optical sheets 41 to 43 on the LED bar 46 side (e.g., near the light source). The reflector 47 reflects the light from the LED bar 46 toward the light guide plate 44. The reflector 47 extends at least from a first position P1 between the end portion of the light guide plate 44 on the LED bar 46 side and the end portion of the optical sheets 41 to 43 on the LED bar 46 side to a second position P2 in front of the LED bar 46. Also, the reflector 47 is disposed so that its end (e.g., the inner edge) on the side of the screen center of the display device 100 will be located between the end (e.g., the inner edge) of the cell guide 30 on the side of the screen center and the end (e.g., the outer edge) of the optical sheets 41 to 43 on the LED bar 46 side in a front view. In the illustrated embodiment, the reflector 47 is generally an L-shaped member extending along the entire length of the light guide plate 44 in the Y direction. As shown in FIG. 3B, the front section of the reflector 47 is disposed in front of the light guide plate 44 and the LED bar 46, while the side section of the reflector 47 is disposed on the outside surface of the first heat sink 80a.

The cell guide 30 is disposed between the liquid crystal cell 20 and the backlight unit 40. The cell guide 30 is a metal member made of SECC (steel electrically chromate coated) or the like. The cell guide 30 presses on at least part of the peripheral edge of the backlight unit 40 from the front face side. The cell guide 30 does not have to be made from SECC, and can instead be made from aluminum or an aluminum alloy, copper or a copper alloy, stainless steel, or the like. The cell guide 30 in this embodiment is a member that presses on the four sides (e.g., the peripheral edge) of the backlight unit 40 from the front face side.

The cell guide 30 has a cushioning member 72 and a cushioning member 73. The cushioning member 72 is disposed at a position in contact with the liquid crystal cell 20 and serves as a first protective member that protects the surface of the liquid crystal cell 20. The cushioning member 73 is disposed at a position in contact with the backlight unit 40 and protects the surface of the backlight unit 40. That is, the cushioning member 72 protects a region on the surface of the liquid crystal cell 20, in which region the cell guide 30 overlaps the liquid crystal cell 20 in the Z axis direction view (in the elevational view). The cushioning member 73 protects a region on the surface of the backlight unit 40, in which region the cell guide 30 overlaps the backlight unit 40 in the Z axis direction view. The cushioning members 72 and 73 are porous, elastic members formed by foaming a resin (such as polyurethane). The cushioning member 71 provided to the front cabinet 10 is made from the same material as the cushioning members 72 and 73. The first protective member and second protective member are not limited to the above-mentioned cushioning members 72 and 73, and can instead be a sealing material, including a silicone resin, a urethane resin, or the like. When a sealing material is used as the first protective member and second protective member, the sealing material can be used to coat the cell guide 30 mechanically in the assembly step, which improves assembly efficiency. That is, the cushioning members 71 to 73 are elastic members made of a resin (including rubber-like substances) capable of protecting the surface of the liquid crystal cell 20 or the surface of the backlight unit 40.

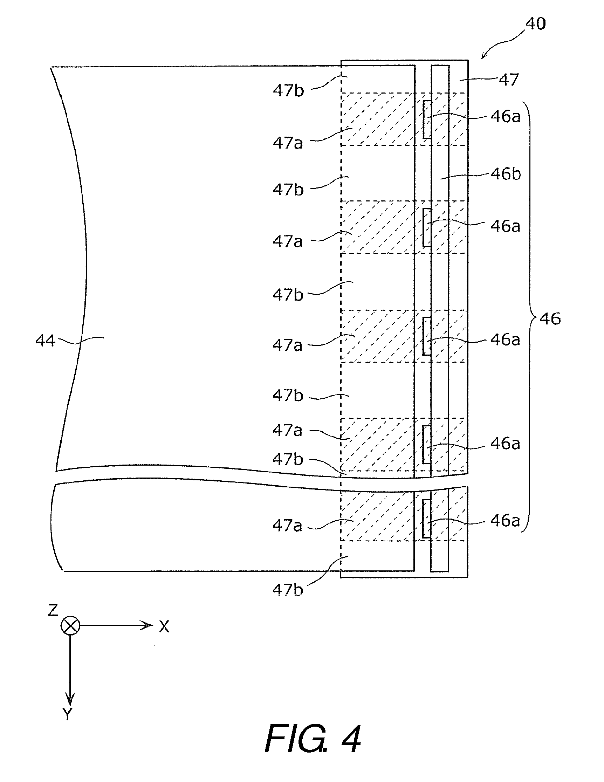

FIG. 4 is a plan view of the light guide plate 44, the LED bar 46 and the reflector 47 of the display device 100, illustrating the relation between the plurality of the LEDs 46a of the LED bar 46 and absorption processing regions 47a on the rear face side of the reflector 47. As shown in FIG. 4, the rear face of the reflector 47 is subjected to partially absorption processing to absorb the light from the LED bar 46. More specifically, in the illustrated embodiment, the rear face of the reflector 47 has a plurality of the absorption processing regions 47a that have undergone absorption processing and a plurality of non-absorption processing regions 47b that have not undergone absorption processing that are alternately arranged relative to each other in the Y axis direction. The absorption processing regions 47a are regions that include positions corresponding to the positions of the LEDs 46a. In other words, the absorption processing regions 47a are arranged corresponding to the LEDs 46a. The "absorption processing" referred to here is, for example, processing involving coating with a black paint, processing involving affixing black tape to the surface, or the like. The non-absorption processing regions 47b have not undergone surface processing of the rear surface of the reflector 47, whose surface has reflective characteristics, so these regions also have reflective characteristics (including scattering characteristics). In other words, the absorption processing regions 47a has a reflectivity that is lower than that of the non-absorption processing regions 47a. In the illustrated embodiment, the absorption processing regions 47a are formed on the rear face of the reflector 47 that contacts with the light guide plate 44 or is disposed in front of the LED bar 46.

### Features

(1) The following two problems can be solved with the display device 100 in accordance with the first embodiment.

The first problem is that when light is emitted from one of the four sides of a rectangular light guide plate as the backlight unit 40, the amount of light emitted from the light guide plate to the rear face side of the display panel in the region on near the side where a light source is disposed is different from the amount of light in the regions near the other three sides.

The second problem is that when the light source has a plurality of point light source elements arranged in parallel on one side of the light guide plate as the LED bar 46, the amount of light in the regions where the point light source elements are disposed is different from the amount of light in the regions in between these regions.

A discrepancy in the amount of light from one region of the scree to the next is caused by this configuration of the display device. This can result in an image of lower quality being displayed on the display panel.

The first problem can be dealt with by disposing the light source at symmetrical positions on both sides of the light guide plate. However, if the display device has a small screen, adequate brightness can be obtained without disposing the light source on both sides of the light guide plate. Thus, it is preferable for the light source to be disposed on just one side of the light guide plate. Also, disposing the light source on just one side of the light guide plate is preferable from the standpoint of saving energy.

The second problem can be dealt with by employing a linear light source that is parallel to one side of the light guide plate (such as a CCFL (cold cathode fluorescent lamp)) as the light source. However, from the standpoint of saving energy, it is preferable to use a plurality of LEDs.

With the display device 100 in accordance with the first embodiment, the rear face of the reflector 47 is subjected to the absorption processing to absorb the light from the LED bar 46. Accordingly, even with the configuration in which the LED bar 46 is disposed on only one side of the light guide plate 44, the amount of light in each region can be adjusted by adjusting the absorption regions so that the amount of light emitted by the light guide plate 44 on the side where the LED bar 46 is not disposed is the same level as the amount of light emitted by the light guide plate 44 on the side where the LED bar 46 is disposed.

Also, with the display device 100 in accordance with the first embodiment, the rear face of the reflector 47 is subjected to the absorption processing in the regions including the positions closest to the LEDs 46a, and is not subjected to the absorption processing in the regions in between the LEDs 46a. This reduces unevenness in the light from the LEDs 46a. Therefore, even with the light source having the plurality of LEDs 46a, the occurrence of hot spots that are regions in which the amount of light becomes larger can be reduced.

As discussed above, with the display device 100, adjustment is made so that unevenness of the amount of light emitted from the light guide plate 44 to the rear face side of the liquid crystal cell 20 in the regions of the liquid crystal cell 20 will be suppressed. Therefore, an image of extremely high quality can be displayed at low power consumption.

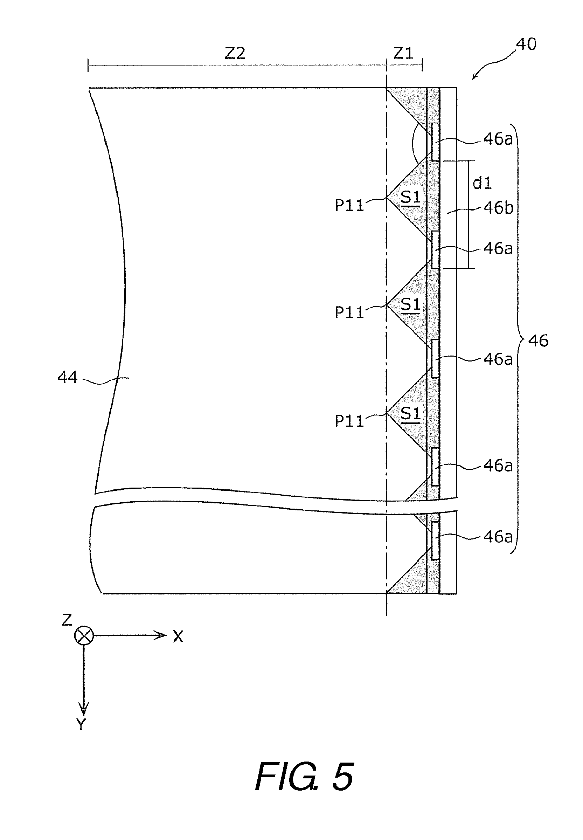

(2) FIG. 5 is a plan view of the light guide plate 44 and the LED bar 46, illustrating the distribution of the light emitted from the LED bar 46 toward the light guide plate 44. In general, with the LED bar 46 in which the LEDs 46a are arranged in a single row in a specific direction, the distribution of the light emitted from the LEDs 46a creates triangular dark regions S1 in between the LEDs 46a. The dark regions S1 are not illuminated (or are not thoroughly illuminated) by the light from the LEDs 46a and each have an apex P11 on the left side as shown in FIG. 5. That is, the light guide plate 44 is classified into a mixing region Z1 and a uniform brightness region Z2. The mixing region Z1 extends from the end on the right side of the light guide plate 44 to the apexes P11 of the dark regions S1, and the light from the LEDs 46a is not thoroughly mixed in the mixing region Z1. The uniform brightness region Z2 is farther to the left side than the mixing region Z1, and the light from the LEDs 46a is mixed to a uniform brightness in the uniform brightness region Z2. The shape of the dark regions S1 is determined by the light distribution angle θ of the LEDs 46a and the spacing d1 between the LEDs 46a.

That is, the smaller is the light distribution angle θ of the LEDs 46a, the more the apex P11 of the dark regions S1 will move to the left, and the larger will be the mixing region Z1. Also, the larger is the spacing d1 between the LEDs 46a, the more the apex P11 of the dark regions S1 will move to the left, and the larger will be the mixing region Z1. On the other hand, the larger is the light distribution angle θ of the LEDs 46a, the more the apex P11 of the dark regions S1 will move to the right, and the smaller will be the mixing region Z1. Also, the smaller is the spacing d1 between the LEDs 46a, the more the apex P11 of the dark regions S1 will move to the right, and the smaller will be the mixing region Z1. That is, the larger is the light distribution angle θ of the LEDs being used, or the smaller is the spacing d1 (that is, the more LEDs 46a there are), the smaller the mixing region Z1 can be made. As a result, the smaller the proportion of the mixing region Z1 will be in the surface area of the front face of the backlight unit 40, and a narrower frame structure can be achieved.

With a configuration in which the reflector 47 is not provided, unless the mixing region Z1 will fit between the light source and the end of the optical sheets on the light source side, when the light with uneven brightness reaches the end of the optical sheets, there will be hot spots, in which the amount of light in a particular region is greater than the amount of light in other regions. Therefore, the end of the optical sheets must be set farther to the left than the mixing region Z1. With the display device 100 in accordance with the first embodiment, however, the reflector 47 is disposed all the way from the first position P1 on the LED bar 46 side of the optical sheets 41 to 43 to the second position P2 in front of the LED bar 46. Thus, the light emitted from the LED bar 46 is prevented from reaching the ends of the optical sheets 41 to 43. Accordingly, this prevents the ends of the optical sheets 41 to 43 from being illuminated by the light emitted from the LED bar 46, and prevents unevenness in the light that is emitted from the backlight unit 40 and directed at the rear face of the liquid crystal cell 20.

Particularly when the light source is formed of a plurality of point light source elements, if the light emitted from the light source reaches the ends of the optical sheets 41 to 43, it ends up being accentuated as hot spots, which is a factor in lowering the quality of the image displayed on the liquid crystal cell 20. However, these hot spots can be prevented by employing the configuration as in the display device 100. Specifically, with the display device 100, the reflector 47 is disposed between the light guide plate 44 and the optical sheets 41 to 43, and is disposed all the way from the first position P1 at the end portion of the optical sheets 41 to 43 on the LED bar 46 side to the second position P2 in front of the LED bar 46.

(3) With the display device 100 in accordance with the first embodiment, the end of the reflector 47 on the side of the screen center is disposed more to the outside of the screen than the end of the cell guide 30 on the side of the screen center. This prevents the surface area over which the light is emitted on the front face of the backlight unit 40 from being constricted by at least the reflector 47. That is, the proportion of the surface area of the region where the light is emitted from the front face of the light guide plate 44 relative to the surface area of the front face of the backlight unit 40 can be maximized. Thus, the backlight unit 40 can be made far more compact.

(4) With the display device 100 in accordance with the first embodiment, the rear face of the reflector 47 is subjected to the absorption processing, so the light emitted forward from the light guide plate 44 can be absorbed without being reflected in the region that has undergone the absorption processing. Consequently, the amount of light guided to the light guide plate 44 can be adjusted for each region, which affords greater latitude in setting the adjustment of the light emitted from the light guide plate 44.

(5) With the display device 100 in accordance with the first embodiment, the spacer 81 having reflective characteristics on its front face is disposed on the rear face side between the light guide plate 44 and the LED bar 46. Thus, the light emitted from the LED bar 46 can be guided more efficiently to the light guide plate 44. Accordingly, more light can be guided to the light guide plate at low power consumption.

### SECOND EMBODIMENT

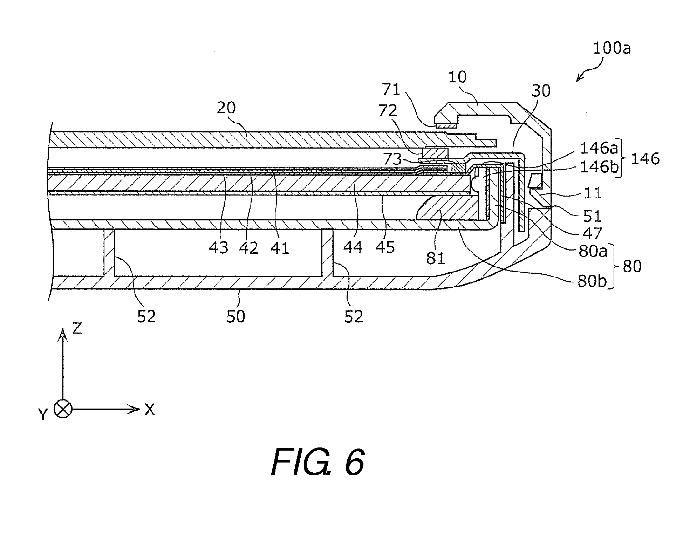

Referring now to FIG. 6, a display device 100a in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

FIG. 6 is a detail cross sectional view of a right side portion of the display device 100a in accordance with the second embodiment, taken along the A-A line in FIG. 1.

As shown in FIG. 6, the display device 100a in accordance with the second embodiment is basically identical to the display device 100 in accordance with the first embodiment, except for an LED bar 146. The LED bar 146 differs from the LED bar 46 in the first embodiment. More specifically, the LED bar 146 is a COB (chip-on-board) type LED. The LED bar 146 includes a light source component 146a and a board component 146b. Other than the LED bar 146, the configuration is the same as that in the first embodiment, so components that are the same will be numbered the same and will not be described again.

With the display device 100a in accordance with the second embodiment, the LED bar 146 has a plurality of point light source elements such as COB-type LEDs with broader light distribution characteristics than package-type LEDs, and the light can be reflected by the spacer 81 and the reflector 47 disposed between the light guide plate 44 and the optical sheets 41 to 43. Thus, the light from the LED bar 146 can be guided more efficiently to the light guide plate 44. Also, when viewed from the front, the light distribution angle of the light emitted from the light source component 146a of the LED bar 146 (more specifically, a plurality of LED chips (not shown)) is wider than that of package-type LEDs (that is, the light distribution angle θ is larger). Thus, the mixing region Z1 can be made smaller. Therefore, a narrower frame structure can be achieved than when package-type LEDs are employed.

### Modification Examples

(1) With the display devices 100 and 100a in accordance with the first and second embodiments, the rear face of the reflector 47 is subjected to the absorption processing, but this is not the only option. The front face of the light guide plate can be subjected to this instead. In other words, the front face of the light guide plate 44 can have the absorption processing regions 47a and the non-absorption processing regions 47b. That is, the absorption processing can be in any form so long as it is performed on a face between the reflector 47 and the light guide plate 44.
(2) With the display devices 100 and 100a in accordance with the first and second embodiments, although not specifically mentioned, the rear face of the reflector 47 can be subjected to the absorption processing so that the most light will be absorbed at positions corresponding to the LEDs 46a or LED chips of the LED bars 46 and 146, and the least the light will be absorbed (that is, the most the light will be reflected) at positions corresponding to in between the LEDs 46a or LED chips. That is, the rear face of the reflector 47 or the front face of the light guide plate 44 can be subjected to the surface processing that forms gradations between the regions where the light is absorbed and the regions where the light is not absorbed.
(3) With the display devices 100 and 100a in accordance with the first and second embodiments, the absorption processing regions 47a and the non-absorption processing regions 47b are arranged alternately in the Y axis direction on the rear face of the reflector 47, but this is not the only option. The absorption processing regions 47a and the non-absorption processing regions 47b can instead be arranged alternately in the X axis direction. In this case, since the rear face of the reflector 47 is subjected to the absorption processing to absorb the light from the LED bar 46 or 146, even with the configuration in which the LED bars 46 and 146 are disposed on only one side of the light guide plate 44, for example, the absorption regions can still be disposed as above so that the amount of the light emitted by the light guide plate 44 on the side where the LED bars 46 and 146 are not disposed will be the same as the amount of the light emitted by the light guide plate 44 on the side where the LED bars 46 and 146 are disposed. This allows the amount of the light to be adjusted for every region.
(4) The configuration in Modification Example (3) is not limited to when the light source is the LED bar 46 or 146, and can also be applied to when a CCFL is used.
(5) With the display devices 100 and 100a in accordance with the first and second embodiments, the absorption processing region 47a that undergoes the absorption processing is a face between the light guide plate 44 and the reflector 47 serving as the first reflection member, but can instead be a face between the light guide plate 44 and the reflective sheet 45 or the spacer 81 serving as a second reflection member.
(6) With the display devices 100 and 100a in accordance with the first and second embodiments, the cell guide 30 is made of a metal material, but can be made from plastic or the like. When the cell guide 30 is made from plastic, it is preferable to provide a reinforcing member made of a metal material that reinforces the peripheral edges of the liquid crystal cell 20, in order to ensure adequate strength at the outer peripheral edges of the liquid crystal cell 20 and the backlight unit 40.

The present invention is useful as a display device with which high-quality images can be displayed at low power consumption, and particularly as a liquid crystal display, a liquid crystal television set, or the like.

In the illustrated embodiments, the display device includes a display panel and a backlight unit. The display panel is configured to display images. The backlight unit is disposed on a rear side relative to the display panel. The backlight unit has a light source that is configured to emit light, a light guide plate that is configured to guide the light from the light source from a side face of the light guide plate to a front face to the light guide plate to emit the light toward a rear face of the display panel, an optical sheet that is disposed on a front side relative to the light guide plate, and a first reflection member that is disposed between an end portion of the light guide plate near the light source and an end portion of the optical sheet near the light source, and is configured to reflect the light from the light source. One of a rear face of the first reflection member and the front face of the light guide plate has at least one absorption processing region that is configured to absorb the light from the light source.

With this display device, one of the rear face of the first reflection member and the front face of the light guide plate has at least one absorption processing region that is configured to absorb the light from the light source. Thus, even if, for example, the light source is disposed on only one side of the light guide plate, or if a plurality of LEDs are utilized as the light source, the amount of light emitted from the light guide plate toward the rear face of the display panel can be adjusted so as to reduce variance from one region of the display panel to the next. Accordingly, an image of high quality can be displayed at low power consumption.

Also, the first reflection member can, for example, extend at least from a position between the end portion of the light guide plate and the end portion of the optical sheet to a position in front of the light source.

With this embodiment, the first reflection member extends from the end portion of the optical sheet near the light source to the position in front of the light source. Thus, the light emitted from the light source can be prevented from reaching the end portion of the optical sheet. Accordingly, the end portion of the optical sheet can be prevented from being illuminated by the light emitted from the light source. This prevents unevenness in the light emitted from the backlight unit toward the rear face of the display panel.

Also, the display device can, for example, further includes a support member supporting a peripheral edge of the backlight unit from the front side. The first reflection member can have an inner edge that is located between an outer edge of the optical sheet near the light source side and an inner edge of the support member in a front elevational view.

With this embodiment, the inner edge of the first reflection member is disposed more to the outside of the screen than the inner edge of the support member. This prevents the surface area of the front face of the backlight unit that emit the light from being constricted by at least the first reflection member. That is, the ratio of the surface area of the region where the light is emitted from the front face of the light guide plate to the surface area of the front face of the backlight unit can be maximized, so the backlight unit can be compact.

Also, the display device can, for example, be configured such that the light source has a plurality of point light source elements that are aligned along the side face of the light guide plate. The one of the rear face of the first reflection member and the front face of the light guide plate has a plurality of absorption processing regions and a plurality of non-absorption processing regions alternately arranged relative to each other. The absorption processing regions are arranged corresponding to the point light source elements.

With this embodiment, on the face between the first reflection member and the light guide plate, the regions including positions closest to the point light source elements are subjected to the absorption processing, and the regions in between the point light source elements are not subjected to the absorption processing. Thus, unevenness in the light from the light source can be reduced. Therefore, the occurrence of hot spots can be reduced even with the light source having the point light source elements.

Also, the light source can, for example, have a COB (chip-on-board) type LED (light emitting diode).

With this embodiment, even when using point light source elements having more widespread light characteristics than a package-type LED, such as with COB-type LEDs, since the light can be reflected by the first reflection member disposed between the light guide plate and the optical sheet, the light from the light source can be guided efficiently to the light guide plate. Also, since the distribution angle of the light emitted from the various LED chips is wider than that of package-type LEDs when viewed from the front, the mixing region can be made smaller. Therefore, a narrower frame structure can be achieved than when package-type LEDs are used.

Also, the rear face side of the first reflection member can have the absorption processing region.

With this embodiment, since the absorption processing is performed on the rear face of the first reflection member, the light emitted forward from the light guide plate can be absorbed without being reflected in the absorption processing region that has undergone the absorption processing. Consequently, the amount of the light guided to the light guide plate can be adjusted for each region, and the adjustment of light emitted from the light guide plate can be freely set.

Also, the front face side of the light guide plate can have the absorption processing region.

With this embodiment, since the absorption processing is performed on the front face of the light guide plate, the light emitted forward from the light guide plate can be absorbed without being reflected in the absorption processing region that has undergone the absorption processing. Consequently, the amount of the light guided to the light guide plate can be adjusted for each region, and the adjustment of light emitted from the light guide plate can be freely set.

Also, the display device can further include a second reflection member having a front face with reflective characteristics, the second reflection member being disposed on the rear side relative to the light guide plate and a part of the light source.

With this embodiment, since the second reflection member is provided on the rear side of the light guide plate and the part of the light source, the light emitted from the light source can be guided more efficiently to the light guide plate. Therefore, more light can be guided to the light guide plate at low power consumption.

With the display device in accordance with one aspect of the present invention, a high-quality image can be displayed at low power consumption.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a display device in an upright position. Accordingly, these directional terms, as utilized to describe the display device should be interpreted relative to a display device in an upright position on a horizontal surface. The terms "left" and "right" are used to indicate the "right" when referencing from the right side as viewed from the front of the display device, and the "left" when referencing from the left side as viewed from the front of the display device.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.
While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A display device comprising:
a display panel configured to display images; and
a backlight unit disposed on a rear side relative to the display panel, the backlight unit having
a light source that is configured to emit light,
a light guide plate that is configured to guide the light from the light source from a side face of the light guide plate to a front face to the light guide plate to emit the light toward a rear face of the display panel,
an optical sheet that is disposed on a front side relative to the light guide plate, and
a first reflection member that is disposed between an end portion of the light guide plate near the light source and an end portion of the optical sheet near the light source, and is configured to reflect the light from the light source,
one of a rear face of the first reflection member and the front face of the light guide plate has at least one absorption processing region that is configured to absorb the light from the light source.

2. The display device according to claim 1, wherein
the first reflection member extends at least from a position between the end portion of the light guide plate and the end portion of the optical sheet to a position in front of the light source.

3. The display device according to claim 1 or 2, further comprising
a support member supporting a peripheral edge of the backlight unit from the front side.

4. The display device according to claim 3, wherein
the first reflection member has an inner edge that is located between an outer edge of the optical sheet near the light source and an inner edge of the support member in a front elevational view.

5. The display device according to any one of claims 1 to 4, wherein
the light source has a plurality of point light source elements that are aligned along the side face of the light guide plate.

6. The display device according to claim 5, wherein
the one of the rear face of the first reflection member and the front face of the light guide plate has a plurality of absorption processing regions and a plurality of non-absorption processing regions alternately arranged relative to each other.

7. The display device according to claim 6, wherein
The absorption processing regions are arranged corresponding to the point light source elements.

8. The display device according to claim 6 or 7, wherein
the absorption processing regions has a reflectivity that is lower than than that of the non-absorption processing regions.

9. The display device according to any one of claims 1 to 8, wherein
the light source has a chip-on-board type light emitting diode.

10. The display device according to any one of claims 1 to 9, wherein
the rear face of the first reflection member has the absorption processing region.

11. The display device according to any one of claims 1 to 9, wherein
the front face of the light guide plate has the absorption processing region.

12. The display device according to any one of claims 1 to 11, further comprising
a second reflection member having a front face with reflective characteristics, the second reflection member being disposed on the rear side relative to the light guide plate and a part of the light source.
